# EUROPÄISCHE PATENTSCHRIFT

(11) **EP 3 548 832 B1**
(45) Veröffentlichungstag und Bekanntmachung des Hinweises auf die Patenterteilung: **27.10.2021**
(21) Anmeldenummer: 17821784.0
(22) Anmeldetag: 01.12.2017
(51) Int. Cl.: F41F 3/042, F41F 3/077, F41H 11/02, F41H 13/00, F42B 10/62, F42B 12/66

(54) **FLUGKÖRPER ZUM ABFANGEN VON FREMDDROHNEN**
MISSILE FOR INTERCEPTING ALIEN DRONES
CORPS VOLANT DESTINÉ À INTERCEPTER DES DRONES ENNEMIS

(30) Priorität: 02.12.2016 US 201662429153 P
(43) Veröffentlichungstag der Anmeldung: 09.10.2019
(73) Patentinhaber: Skysec GmbH, 8488 Turbenthal (CH)
(72) Erfinder: METZ, Manuel, 8356 Ettenhausen (CH); METZ, Franco, 8547 Gachnang (CH)
(74) Vertreter: Kirschner, Sebastian
(86) Internationale Anmeldenummer: PCT/EP2017/001402
(87) Internationale Veröffentlichungsnummer: WO 2018/099603

(56) Entgegenhaltungen:
- EP-A1- 0 175 914
- EP-A1- 2 042 826
- US-B1- 6 626 077
- US-B2- 8 387 540

## Beschreibung

Die Erfindung betrifft einen Flugkörper zum Abfangen von Fremddrohnen mit den Merkmalen des Oberbegriffes des Patentanspruches 1.

Der Flugkörper weist ein Fangnetz auf, wobei an dem Fangnetz mehrere Gewichte befestigt sind. Das Fangnetz und die Gewichte können zu einem gegebenen Zeitpunkt ausgestoßen werden, um eine Fremddrohne einzufangen. Die Fremddrohne verheddert sich dabei in dem Fangnetz und kann ihre geplante Flugroute nicht weiter fortsetzen.

Aus der EP 0 175 914 A1 ist ein Flugkörper in Form eines Geschosses zum Bekämpfen von freibeweglichen Objekten bekannt. Das Geschoss wird durch eine Schubkraft in Richtung eines zu bekämpfenden Objektes bewegt. Im bestimmten Abstand zum Objekt wird ein Fangnetz derart aus einem Hülsenkörper ausgestoßen, so dass das Fangnetz großflächig entfaltet wird. Das Fangnetz entfaltet sich dabei in Flugrichtung gesehen hinter dem Geschoss. Das Fangnetz ist an einem hinteren Teil des Geschosses vor dem Ausstoß gelagert. Das Geschoss kann beispielsweise aus einem Kanonenrohr oder einem Kanister abgeschossen oder aber mittels eigener, von geeigneten Mitteln erzeugter Schubkraft in Richtung des zu bekämpfenden Objektes bewegt werden. Das Geschoss kann gelenkt, umgelenkt, ballistisch oder aerodynamisch oder hydrodynamisch von einer geeigneten Abschussvorrichtung auf das Objekt gerichtet werden. Das Geschoss kann als Drohne ausgebildet sein. Vor Erreichen des zu bekämpfenden Objektes wird durch Zünden eines Zündorgans und somit durch die Wirkung einer gezündeten Treibladung ein Bodenteil des Flugkörpers an einer Sollbruchstelle aus einem Hülsenkörper ausgestoßen. Der Hülsenkörper wird dabei zusammen mit dem Bodenteil und mit dem Zündorgan in zwei symmetrische Teilstücke getrennt. In einer Ausgestaltung sind die Hülsenteile dabei über Federmittel mit dem Fangnetz verbunden, wobei diese Hülsenteile nach dem Aufsprengen als Gewichte dienen, die das Fangnetz aufspannen.

Aus der US 6,626,077 B1 ist ein Flugkörper zum Abfangen von anderen Flugobjekten mit einem Fangnetz bekannt. An dem Fangnetz sind mehrere Gewichte umfänglich befestigt. Als Flugkörper kann dabei eine Rakete oder ein bemanntes oder unbemanntes Flugobjekt dienen. Der Flugkörper weist einen Kopf mit dem Fangnetz auf, wobei der Kopf mittels einer Sprengladung aufsprengbar ist, wobei Gehäuseteile des Kopfes als Gewichte dienen, um das Fangnetz aufzuspannen. Da das Fangnetz am Kopf des Flugkörper angeordnet ist, besteht hier die Gefahr, dass durch das Aufspannen des Fangnetzes nicht der fremde Flugkörper gefangen wird, sondern durch die starke Bremswirkung des Fangnetzes der eigene Flugkörper durch das Netz eingefangen wird und somit die eigentliche Fangwirkung gegenüber dem Fremdflugkörper nicht eintritt. An dem Fangnetz sollen mehrere Fallschirme angebracht sein, die den eingefangenen Fremdflugkörper zusammen mit dem Fangnetz beim Fall zum Boden abbremsen.

Aus der RU 249 0 584 C1 ist ein Flugkörper zum Abfangen von Fremddrohnen bekannt. Der Flugkörper ist als eine Art Modellflugzeug mit einem Flugzeugrumpf, Tragflächen und einem Leitwerk ausgebildet. Der Flugkörper weist mehrere Fangnetze auf, an deren Enden Gewichte befestigt sind. In dem Flugkörper sind vier Kassetten mit Fangnetzen enthalten. Die Gewichte sind dabei innerhalb der Kassetten angeordnet. Die Kassetten sind rechts, links, ober- und unterhalb des Flugzeugrumpfes angeordnet. Ferner ist in den Kassetten jeweils ein Fallschirm angeordnet. Der Flugkörper wird vom Boden aus beim Eintritt einer Fremddrohne so gesteuert, dass die Fremddrohne von hinten angeflogen wird. Wenn die Fremddrohne bis auf 500 m erreicht worden ist, wird mittels einer Videokamera die Fremddrohne erfasst, wobei der Bediener nun die Fluggeschwindigkeit an die Fluggeschwindigkeit der Fremddrohne anpasst. Wenn nun einer der Sensoren am Flugzeugrumpf die Fremddrohne erfasst, so werden automatisch das Netz und die Gewichte zusammen ausgeschossen. Wenn die Fremddrohne durch das Netz eingefangen worden ist, werden pyrotechnische Kartuschen gezündet, die das Gehäuse der Kassetten absprengen und einen Fallschirm freigeben.

Aus der US 8,387,540 B2 ist ein Flugkörper zum Abfangen vom Fremddrohnen mit einem Fangnetz bekannt, wobei mehrere Gewichte mit dem Fangnetz verbunden sind, wobei das Fangnetz vom Flugkörper abstoßbar ist. Die Gewichte sind ebenfalls vom Flugkörper abstoßbar, wobei das Fangnetz mittels eines ersten Mittels und die Gewichte mittels eines zweiten Mittels abstoßbar sind.

Aus der EP 2 042 826 A1 ist eine Vorrichtung zum Werfen von Netzen bekannt, durch die ein zuverlässiges Entfalten der Netze bewirkt werden soll und bei der das Ausstoßen der Gewichte zeitlich verzögert nach dem Ausstoßen des Netzes aus einem Lauf erfolgt. Es sind für das Ausstoßen der Gewichte und des Netzes keine separaten Mittel vorgesehen.

Die eingangs beschriebenen Flugkörper sind noch nicht optimal ausgebildet. Es hat sich herausgestellt, dass es in der Praxis schwierig ist, dass Fangnetz während des Fluges zu entfalten und die Fremddrohne sicher einzufangen.

Der Erfindung liegt daher die Aufgabe zugrunde, dass Einfangen der Fremddrohne zu verbessern. Diese der Erfindung zugrunde liegende Aufgabe wird nun durch einen Flugkörper mit den Merkmalen des Patentanspruches 1 gelöst.

Das Fangnetz ist mittels eines ersten Mittels und die Gewichte sind mittels eines zweiten Mittels abstoßbar, wobei die Gewichte und das Fangnetz zu unterschiedlichen Zeitpunkten vom Flugkörper abstoßbar sind. Dies stellt das Aufspannen des Fangnetzes sicher. Das Fangnetz ist zunächst innerhalb eines Behälters angeordnet. Der Behälter wird als erstes abgestoßen, beispielsweise durch Druckluft oder durch mindestens einen pyrotechnischen Treibsatz. Erst danach werden in einem zweiten Schritt die mit dem Umfang des Fangnetzes über flexible Verbindungsmittel, bspw. Seile, verbundenen Gewichte vom Flugkörper abgestoßen. Hierdurch wird das Fangnetz zunächst aus dem Behälter herausgezogen. Dies stellt sicher, dass beim Abstoßen der Gewichte das Fangnetz zwar noch nicht entfaltet, aber bereits entrollt ist. Dadurch ist die Gefahr verringert, dass das Fangnetz sich vor dem Einfangen der Fremddrohne verheddert. Der Behälter ist an einem hinteren Bereich des Flugkörpers angeordnet. Der Behälter bildet insbesondere das Ende des Rumpfes des Flugkörpers. Der Behälter wird entgegen der Flugrichtung, d.h. nach hinten abgestoßen. Das Fangnetz befindet sich in einem Behälter, der den Heckbereich des Flugkörpers bildet. Der Behälter ist durch das erste Mittel abstoßbar. Die Gewichte sind mit flexiblen Verbindungsmitteln verbunden, die von den Gewichten zum Fangnetz führen. Diese Verbindungsmittel werden aus dem Behälter geführt und außen am Rumpf bis zu den Gewichten geführt, die dort in dafür vorgesehene Ausstoßbuchsen gesteckt sind. Die Ausstoßbuchsen sind so verteilt, dass diese voneinander wegzeigen. Das Aufspannen des Fangnetzes läuft somit in zwei Phasen ab. In der ersten Phase wird der Behälter mit dem Fangnetz nach hinten ausgestoßen. Nach einer bestimmten definierten Zeit, nachdem das Netz mehrheitlich den Behälter und den Rumpf verlassen hat, werden die Gewichte aus den Ausstoßbuchsen ausgestoßen. Diese Zeit hängt vorzugsweise von der Eigengeschwindigkeit des Flugkörpers ab. Die Ausstoßkraft ist so groß, dass das Fangnetz durch die Gewichte aufgespannt wird. Die Netzausstoßsequenz wird oder kann auf unterschiedliche Art und Weise ausgelöst werden, nämlich durch eine Sensorik in einem Suchkopf mit bspw. einem Annäherungsradar, mit einem stereobildgebenden System oder mit einem Ultraschallsensor oder durch eine reine externe Auslösung über eine kabellose Verbindung. Ferner ist eine distanzbasierte Auslösung der Netzausstoßsequenz denkbar.

Der Flugkörper hat einen Antrieb im vorderen Bereich seines Rumpfes. Der Antrieb ist vor dem Schwerpunkt des Flugkörpers angeordnet. Der Antrieb ist im Bugbereich des Flugkörpers angeordnet. Dies hat den Vorteil, dass die Gewichte und das Fangnetz hinter dem Antrieb anordbar sind. Der Antrieb besteht insbesondere aus einem Propellerantrieb. Der Antrieb weist vorzugsweise einen Elektromotor auf. Die Gewichte sind vorzugsweise im Bereich des Schwerpunkts des Flugkörpers angeordnet. Dies verbessert die Wendigkeit des Flugkörpers.

Insbesondere weist der Flugkörper mehrere Flügel auf. Vorzugsweise weist der Flugkörper vier Flügel auf, um den Flugkörper in alle Querrichtungen gleich beschleunigen zu können. Der Antrieb des Flugkörpers ist so realisiert, dass vor dem Antrieb und/oder hinter dem Antrieb zusätzliche Elektronik montiert werden kann bzw. montiert ist. Der Flugkörper weist eine Raketenform auf, wodurch eine hohe Endgeschwindigkeit erreichbar ist. Die Endgeschwindigkeit liegt vorzugsweise bei mehr als 100 km/h, vorzugsweise bei mehr als 200 km/h.

Im mittleren und hinteren Bereich des Flugkörpers sind insbesondere ein Fallschirm und das Fangnetz angeordnet. Diese können über die Bordelektronik oder über einen externen Steuerbefehl ausgestoßen werden. Die Bordelektronik kann autonom oder manuell ein elektrisches Signal auslösen, welches in beliebiger zeitlicher Sequenz den Fallschirm, die Gewichte mittels Ausstoßbuchsen und das Behältnis ausstoßen können.

Die Bordelektronik des Flugkörpers ist in der Lage, den Flugkörper autonom oder mit externen Steuerbefehlen zu lenken oder zu navigieren. Die Steuerung des Flugkörpers erfolgt über aerodynamische Steuerflächen und/oder über das Schwenken des Antriebs.

Der Flugkörper findet das anzufliegende Objekt mit Hilfe eines Suchkopfes. Der Suchkopf ist vorzugsweise vor dem Antrieb angeordnet. Der Suchkopf kann entweder ein Radar oder ein optisches System aufweisen.

Der Flugkörper dient dazu, das sich im Inneren des Behälters befindliche Fangnetz zu einem anderen Flugkörper oder Objekt zu befördern. Dieses kann sich in der Luft oder am Boden befinden. Die Navigation geschieht autonom oder durch manuelle Steuerbefehle. Dem Flugkörper werden mit Hilfe einer kabellosen Datenverbindung Informationen über den Ort oder die Richtung des anzufliegenden Objektes gesendet.

Der Start des Flugkörpers erfolgt von einer Rampe oder mittels einer Startanordnung die einen Behälter aufweist. Die Landung des Flugkörpers erfolgt mit einem Fallschirm. Der Fallschirm ist zunächst innerhalb des Flugkörpers angeordnet. Es ist denkbar, mehrere Fallschirme im Flugkörper anzuordnen, wobei mindestens einer der Fallschirme mit dem Flugkörper und mindestens einer der Fallschirme mit dem Fangnetz verbunden ist.

Mit einem Netzrand des Fangnetzes sind vorzugsweise in gleichen Abständen mehrere Gewichte, insbesondere vier Gewichte verbunden. Die flexiblen Verbindungen können dabei durch Schnüre, Leinen, Seile, Drähte, Ketten oder dgl. gebildet sein. Die Gewichte sind vorzugsweise jeweils mit einem Seil am Fangnetz befestigt. Die Gewichte dienen zum Aufspannen des Fangnetzes. Wenn alle Gewichte voneinander weggezogen werden, wird das Fangnetz aufgespannt. Das Fangnetz ist mit dem Flugkörper über eine weitere flexible Verbindung, wie bspw. einem Seil, einem Draht, einer Kette od. dgl., verbunden, so dass, wenn etwas mit dem Fangnetz eingefangen wird, das Fangnetz und das eingefangene Objekt mit dem Flugkörper und somit auch mit dem Fallschirm verbunden sind.

Damit der Flugkörper und auch mögliche eingefangene Objekte mit möglichst wenig Schaden zu Boden gebracht werden können, wird ein Fallschirm verwendet, der mit dem Flugkörper verbunden ist. Der Fallschirm befindet sich vorzugsweise vor dem Fangnetz. Der Fallschirm ist mit dem Fangnetz verbunden und wird bei einem Treffer automatisch durch die Bremswirkung bzw. die Verzögerung der eingefangenen Fremddrohne im Fangnetz ausgelöst. Wird das Ziel verfehlt, wird der Fallschirm nach einer definierten Zeit von der Bordelektronik ausgestoßen. Das Fangnetz zieht den Fallschirm aus dem Flugkörper, sobald ein Objekt bspw. die Fremddrohen im Netz gefangen wird und dieses Objekt eine Verzögerung bzw. eine Kraft auf ein Verbindungsseil entwickelt. In einem vorderen Bereich ist vorzugsweise eine Auswurfladung angeordnet, die dazu dient den Fallschirm bei einem Fehltreffer auszustoßen. Es ist denkbar mehrere Falschschirme im Flugkörper anzuordnen, wobei mindestens einer der Fallschirme mit dem Flugkörper und mindestens einer der Fallschirme mit dem Fangnetz verbunden ist.

Vorzugsweise weist der Flugkörper eine austauschbare Einheit auf, wobei die austauschbare Einheit den Behälter für den Fallschirm und ein Rumpfteil mit einem Hohlraum für den Fallschirm aufweist. Diese austauschbare Einheit weist ferner vorzugsweise die Ausstoßbuchsen für die Gewichte auf. Die austauschbare Einheit ist vorzugsweise über eine Rast- oder eine Bajonettverbindung mit dem vorderen Rumpfteil verbindbar bzw. verbunden. Die Verwendung einer austauschbaren Einheit mit dem Fangnetz, den Gewichten und dem Fallschirm sowie den zugeordneten Mitteln zum Ausstoßen derselben hat den Vorteil, dass der Flugkörper nach einem Abfangversuch schnell wieder einsatzbereit gemacht werden kann, in dem eine neue austauschbare Einheit an dem Rumpfteil mit dem Antrieb angeschlossen wird. Die Verwendung einer austauschbaren Einheit hat den Vorteil, dass der Fallschirm und/oder das Fangnetz nicht jedes Mal wieder gefaltet und aufgerollt werden müssen, um den Flugkörper einsatzfähig zu machen. Der Rumpfteil der austauschbaren Einheit weist einen in Richtung des Behälters offenen Hohlraum auf, wobei in dem Hohlraum der Fallschirm angeordnet ist. Der Fallschirm ist dabei einerseits mit dem Fangnetz über ein flexibles Verbindungsmittel, bspw. eine Leine, ein Seil oder dergleichen verbunden und vorzugsweise andererseits mit einem Boden oder einer Seitenwand des Rumpfteils, so dass mittels des Fallschirms sowohl das Fangnetz mit der Fremddrohne als auch der Flugkörper selbst gelandet werden kann. Das Rumpfteil ist vorzugsweise über einen elektronischen oder optischen Kontakt mit der Bordelektronik und/oder einer Stromversorgung gekoppelt, damit die Ausstoßbuchsen und/oder die Mittel zum Abstoßen des Behälters und/oder die Mittel zum Ausstoßen des Fallschirms während des Fluges ausgelöst werden können.

Sobald ein Zielobjekt, respektive dessen Position oder Richtungsvektor erkannt worden ist, kann der Flugkörper gestartet werden. Der Flugkörper fliegt das Ziel mit Hilfe der Bordelektronik und den Positionsdaten des Zieles an, welche über ein Datenlink der Bordelektronik zur Verfügung gestellt werden. Zusätzlich kann die Zielführung durch einen Suchkopf unterstützt werden. Bevor der Flugkörper das Zielobjekt kreuzt oder auf dem Zielobjekt auftrifft, wird der Behälter mit Fangnetz ausgestoßen und sequentiell werden die Gewichte am Rand des Fangnetzes ausgestoßen, so dass sich das Fangnetz hinter dem Flugkörper entfaltet. Sobald das Zielobjekt sich im Fangnetz verfängt, zieht das Fangnetz mit dem eingefangenen Zielobjekt den Fallschirm aus dem Flugkörper. Falls kein Objekt mit dem Fangnetz eingefangen wird, wird der Fallschirm ausgestoßen. Der Flugkörper kann auch jederzeit nach dem Start mittels des Fallschirms gelandet werden.

Der Flugkörper kann auf unterschiedliche Art und Weisen gestartet werden, um ein möglichst breites Einsatzspektrum abdecken zu können. Der Flugkörper ist fähig senkrecht oder in einem Winkel kleiner als 90° zur Erdoberfläche selbstständig aus eigener Kraft zu starten. Der Flugkörper kann somit aus einem Kanister oder aus einem Behälter starten. Der Flugkörper kann dank seiner Senkrechtstarteigenschaften auch einfach von Hand in die Luft befördert werden. Desweiteren kann der Flugkörper von einem anderen Flugkörper getragen werden und auch von dort aus gestartet werden. Beispielsweise kann der Flugkörper von einem Flugzeug aus gestartet werden. Der Flugkörper kann ferner an einer Drohne oder an ein anderes fliegendes Objekt montiert werden und von dort aus gestartet werden.

Es gibt nun eine Vielzahl von Möglichkeiten, den erfindungsgemäßen Flugkörper in vorteilhafter Art und Weise auszugestalten und weiterzubilden. Hierfür darf zunächst auf die dem Patentanspruch 1 nachgeordneten Patentansprüche verwiesen werden. Im Folgenden werden bevorzugte Ausgestaltungen der Erfindung anhand der Zeichnung und der dazugehörigen Beschreibung näher erläutert. In der Zeichnung zeigt:
- Fig.1: in einer schematischen Ansicht einen Flugkörper zum Abfangen von Fremddrohnen,
- Fig. 2: in einer schematischen Seitenansicht den Flugkörper aus Fig. 1, wobei hier nun bereits ein Fangnetz und ein Fallschirm ausgestoßen worden sind,
- Fig. 3: in einer schematischen Schnittansicht einen Teil des Flugkörpers aus Fig. 1 und 2, nämlich einen hinteren Rumpfteil, der eine austauschbare Einheit bildet und das Fangnetz und den Fallschirm aufweist,
- Fig. 4: in einer schematischen Darstellung eine Flugbahn des Flugkörpers, wobei eine Fremddrohne eingefangen wird,

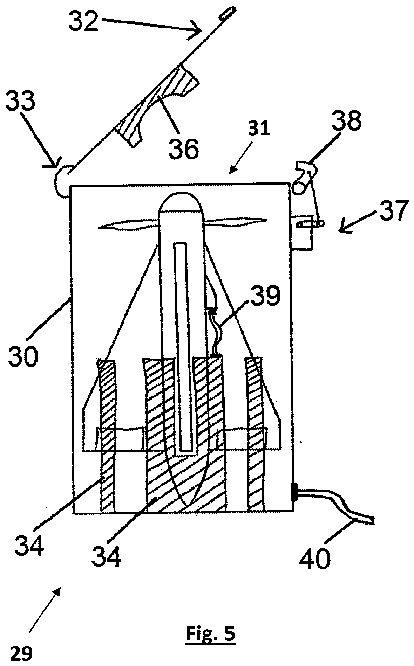

- Fig. 5: in einer schematischen Schnittansicht einen Behälter mit dem Flugkörper, wobei der Flugkörper selbstständig aus dem Behälter starten kann,

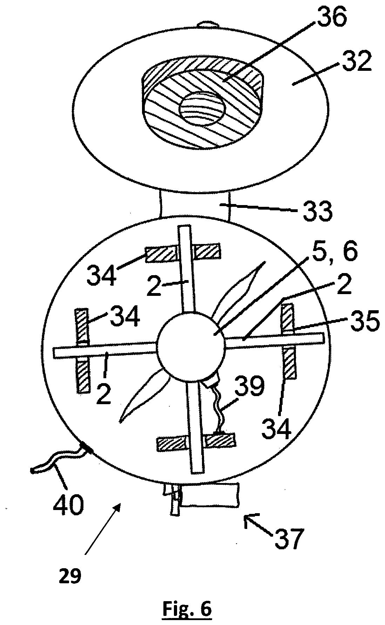

- Fig. 6: in einer schematischen Draufsicht den geöffneten Behälter mit dem Flugkörper,

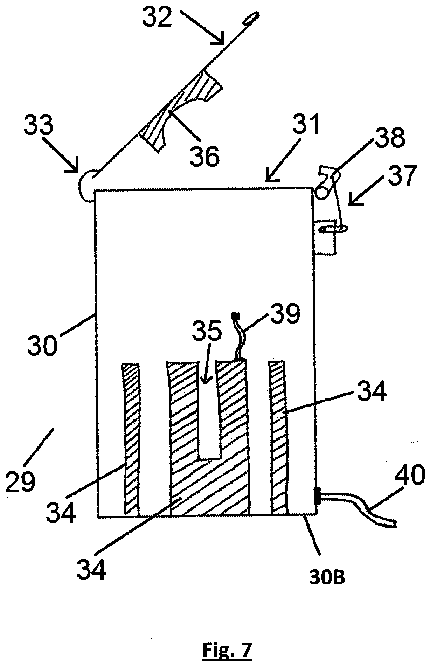

- Fig. 7: in einer schematischen Schnittdarstellung den geöffneten Behälter ohne Flugkörper, und

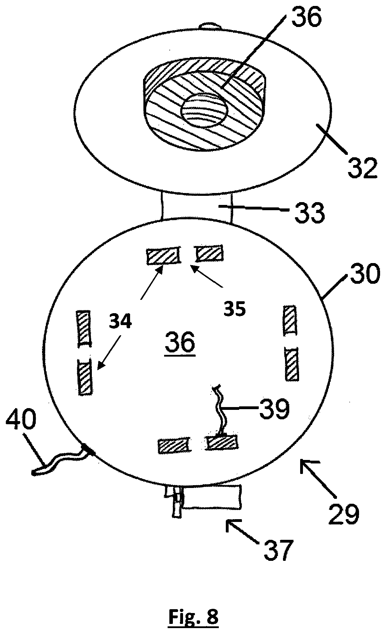

- Fig. 8: in einer schematischen Draufsicht den Behälter ohne Flugkörper.

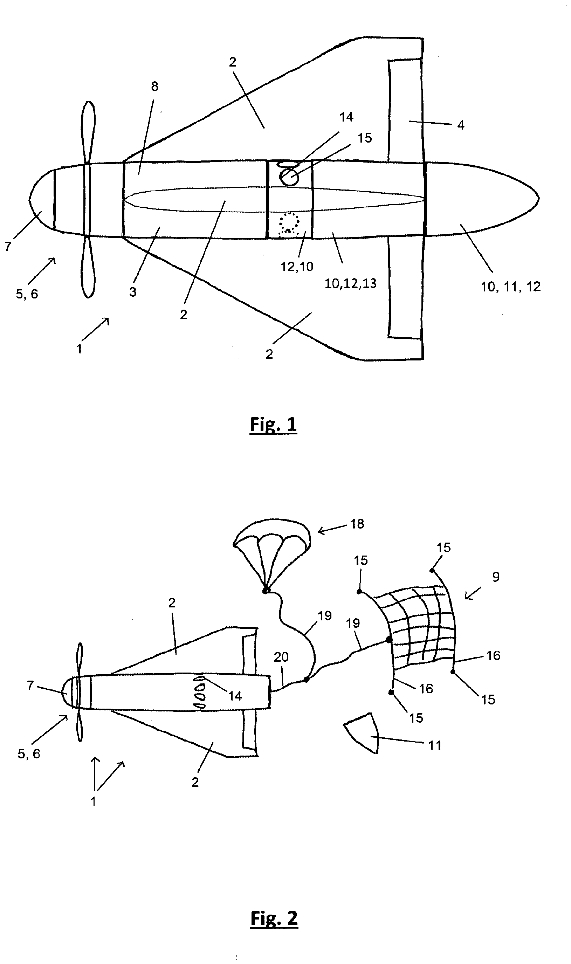

In den Fig. 1 bis 4 ist ein Flugkörper 1 gut zu erkennen. Der Flugkörper 1 weist die Form einer Rakete auf. Der Flugkörper 1 weist mehrere Flügel 2, insbesondere drei oder mehr Flügel 2 auf, wobei jeder Flügel 2 insbesondere ein Ruder 4 aufweist. Insbesondere sind vier Flügel 2 umfänglich gleichmäßig beabstandet um einen Rumpf 3 angeordnet.

In einem vorderen Bereich des Rumpfes 3 ist ein Antrieb 5, insbesondere in Form eines Propellerantriebs 6 vorhanden. Der Antrieb 5 weist vorzugsweise einen Elektromotor auf. Die Form des Flugkörpers 1 ist derart gewählt, dass der Flugkörper 1 mittels der Ruder 4 um alle Querachsen leicht gesteuert werden kann. Die Flügel 2 sind im hinteren Bereich des Flugkörpers 1 breiter als im vorderen Bereich, d.h. sie laufen im Wesentlichen in Richtung des Antriebs spitz auf den Rumpf 3 zu. Hierdurch hat der Flugkörper 1 im Wesentlichen die Form einer Rakete, was eine hohe Endgeschwindigkeit erlaubt. Die Endgeschwindigkeit des Flugkörpers 1 liegt bei vorzugsweise mehr als 100 km/h, insbesondere bei mehr als 200 km/h, vorzugsweise im Bereich zwischen 250 km/h und 350 km/h. Dies stellt sicher, dass der Flugkörper 1 mit einer hohen Differenzgeschwindigkeit zu einer Fremddrohne 21 eingesetzt werden kann, was das Einfangen der Fremddrohne 21 mit dem vorliegenden Flugkörper 1 erleichtert.

Die Spitze des Rumpfes 3 ist durch einen Suchkopf 7 gebildet, wobei der Suchkopf 7 mindestens einen, insbesondere mehrere Sensoren aufweist. Der Suchkopf 7 ist vor dem Antrieb 5 angeordnet. Die Sensoren können elektrooptische Sensoren oder Radarsensoren aufweisen. Es ist denkbar, dass der Suchkopf 7 als optisches System eine Kamera, insbesondere eine 4K-Kamera aufweist.

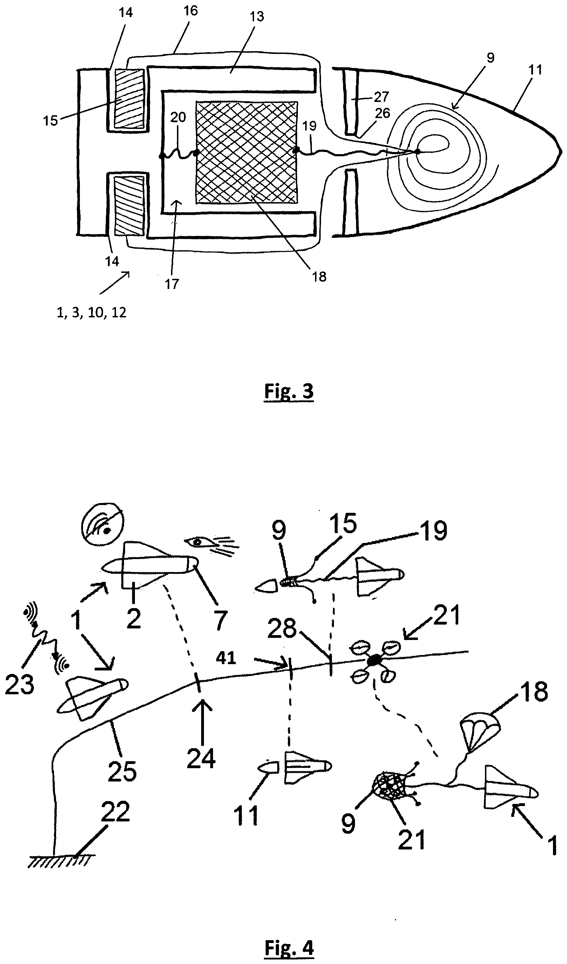

Hinter dem Antrieb 5 weist der Rumpf 3 ein mittleres Rumpfteil 8 auf. Vorzugsweise sind innerhalb des mittleren Rumpfteils 8 die Bordelektronik und/oder eine Energieversorgung angeordnet. Zum Einfangen der Fremddrohne 21 weist der Flugkörper 1 nun ein Fangnetz 9 auf, welches in Fig. 3 verpackt in einem hinteren Rumpfteil 10, nämlich insbesondere in einem Behälter 11 am Ende des hinteren Rumpfteils 10 angeordnet ist. Der Innendurchmesser des Behälters 11 ist größer als eine Öffnung 26 im Boden 30B des Behälters, so dass das Fangnetz 9 erst nach und nach herausgezogen wird, um ein Verheddern zu vermeiden. Durch die Öffnung 26 sind flexible Verbindungsmittel 16, 19 geführt, die das Fangnetz 9 mit den Gewichten 15 und einem Falschirm 18 verbinden.

Das Fangnetz 9 ist in Form eines aufgewickelten Strangs im Behälter 11 angeordnet und bildet somit eine Wicklung. Ein mit den Gewichten 15 verbundenes Ende des Stranges liegt in der Wicklung innen und ein freies Strangende liegt an der Wicklung außen, d.h. an der Innenwand des Behälters 11. Durch diese spiralförmige Wicklung wird sichergestellt, dass das Fangnetz 9 beim Abstoßen des Behälters 11 nach und nach herausgezogen wird, ohne sich zu verheddern.

In Fig. 2 ist der entfaltete Zustand des Fangnetzes 9 dargestellt. Der hintere Rumpfteil 10 setzt sich aus mehreren Einzelbestandteilen zusammen, nämlich u.a. einem Rumpfteil 13 und dem Behälter 11. In bevorzugter Ausgestaltung bildet das hintere Rumpfteil 10 eine austauschbare Einheit 12. Dies erleichtert das Nachladen und das Instandsetzen des Flugkörpers 1 nach einem Abfangversuch. Es können mehrere austauschbare Einheiten 12 bereitgehalten werden, so dass der Flugkörper 1 rasch wieder einsatzfertig gemacht werden kann.

Diese austauschbare Einheit 12 weist das Rumpfteil 13 auf, wobei an dem Rumpfteil 13 mehrere Ausstoßbuchsen 14 mit entsprechenden darin angeordneten Gewichten 15 angeordnet sind. Die Ausstoßbuchsen 14 und die Gewichte 15 sind im Bereich des Schwerpunkts des Flugkörpers 1 angeordnet. Die Ausstoßbuchsen 14 sind dabei derart ausgerichtet, dass die Gewichte 15 quer zur Flugrichtung und damit auch quer zur Längsrichtung des Flugkörpers 1 ausgestoßen werden können. Es ist denkbar, dass die Ausstoßbuchsen 14 dabei im Wesentlichen radial ausgerichtet sind oder dass die Ausstoßbuchsen 14 schräg nach hinten zeigen. Die Gewichte 15 dienen zum Aufspannen des Fangnetzes 9. Hierzu sind die Gewichte 15 mit dem Fangnetz 9 verbunden. Als Verbindung kann insbesondere ein Seil, ein Band oder ein anderes flexibles Verbindungsmittel 16 verwendet werden. Dieses Verbindungsmittel 16 ist einerseits mit einem Gewicht 15 und andererseits mit einem Umfang eines nicht näher bezeichneten Fangnetzes 9 verbunden. Vorzugsweise sind mindestens drei Gewichte 15 und entsprechend mindestens drei Ausstoßbuchsen 14 vorhanden. In der dargestellten Ausgestaltung werden vier Gewichte 15 und entsprechend vier Ausstoßbuchsen 14 verwendet. Das Fangnetz 9 kann im ausgebreiteten Zustand insbesondere viereckig, vorzugsweise quadratisch sein. In einer alternativer Ausgestaltung ist denkbar, ein dreieckiges, fünfeckiges, sechseckiges oder auch rundes Fangnetz 9 zu verwenden.

Das Rumpfteil 13 weist einen Hohlraum 17 auf, wobei innerhalb des Hohlraums 17 ein Fallschirm angeordnet ist. Der Hohlraum 17 ist in Richtung des Behälters 11 geöffnet. Der Fallschirm 18 ist über mindestens ein weiteres flexibles Verbindungsmittel 19 mit dem Fangnetz 9 und vorzugsweise mit dem Rumpfteil 13 über ein weiteres flexibles Verbindungsmittel 20 verbunden. Wenn nun wie im Folgenden beschrieben das Fangnetz 9 zusammen mit dem Fallschirm 18 ausgestoßen wird (vgl. Fig. 2), so wird der Flugkörper 1 und das Fangnetz 9 zusammen mit der ggf. eingefangenen Fremddrohne 21 sicher zu Boden gebracht.

Der Flugkörper 1 weist nun hier nicht dargestellte erste Mittel zum Abstoßen des Behälters 11 auf. Die Mittel können insbesondere an der dem Behälter 11 zugewandten Stirnseite des Rumpfteils 13 angeordnet sein. Diese Mittel können pneumatisch oder beispielsweise durch einen pyrotechnischen Treibsatz gebildet sein. Dieses Mittel ist mittels der Bordelektronik auslösbar. Die Ausstoßbuchsen 14 können ebenfalls mittels der Bordelektronik betätigt werden. Es ist denkbar, dass die Ausstoßbuchsen 14 ebenfalls durch pneumatische Mittel oder durch pyrotechnische Treibsätze bestätigbar sind.

Ferner ist ein Mittel zum Ausstoßen des Fallschirms 18 vorhanden.

Es darf nun anhand von Fig. 4 der Ablauf des Verfahrens zum Abfangen der Fremddrohne 21 näher erläutert werden. Zunächst wird der Flugkörper 1 vom Boden 22 aus gestartet. Am Boden kann beispielsweise ein Radarsystem oder ein anderes Sensorsystem angeordnet sein, dass das Eindringen der Fremddrohne 21 detektiert. Dieses System übermittelt über eine Funkverbindung 23 die Koordinaten und/oder den Richtungsvektor der Fremddrohne 21 dem Flugkörper 1. Es ist denkbar, dass dabei zunächst der Flugkörper 1 vom Boden aus gesteuert wird. An einem Punkt 24 entlang der Flugbahn 25 erfasst nun der Suchkopf 7 die Fremddrohne 21. Hiernach lenkt die Bordelektronik ohne äußeren Einfluss, d.h. ohne Nutzung der Funkverbindung 23 den Flugkörper 1 in Richtung der Fremddrohne 21. Es wird vorzugsweise durch den Suchkopf 7 oder durch die Sensorik am Boden 22 die Geschwindigkeit der Fremddrohne 21 bestimmt. Ferner wird vorzugsweise die Geschwindigkeit des Flugkörpers 1 bestimmt. In Abhängigkeit von dem Abstand des Flugkörpers 1 und insbesondere in Abhängigkeit von der Relativgeschwindigkeit zwischen der Fremddrohne 21 und dem Flugkörper 1 wird an einem Punkt 41 der Behälter 11 mit den beschriebenen Mitteln abgestoßen. Dies führt dazu, dass das Fangnetz 9 durch die Öffnung 26 (vgl. Fig. 3) im Boden 27 des Behälters 11 herausgezogen wird.

Zu einem späteren Zeitpunkt, an einem späteren Punkt 28 der Flugbahn werden danach die Gewichte 15 aus den Ausstoßbuchsen 14 herausgestoßen, wodurch das Fangnetz 9 aufgespannt wird. Dieser Zeitpunkt ist derart gewählt, dass hierdurch sicher die Fremddrohne 21 eingefangen wird. Die Flugbahn des Flugkörpers 1 ist dabei derart an die Flugbahn der Fremddrohne 21 angepasst, dass auch unter Berücksichtigung der Bremswirkung des Fangnetzes 9 auf den Flugkörper 1 die Fremddrohne 21 eingefangen wird. Durch das Einfangen der Fremddrohne 21 wird nun auch der Fallschirm 18 aus dem Hohlraum 17 herausgezogen und der Flugkörper 1 schwebt nun zusammen mit dem Fangnetz 9 und der eingefangenen Fremddrohne 21 zu Boden.

Es hat sich herausgestellt, dass es besonders vorteilhaft ist, dass zu unterschiedlichen Zeitpunkten der Behälter 11 und die Gewichte abgestoßen werden, d.h. erst das Fangnetz 9 und danach zu einem späteren Zeitpunkt die Gewichte 15. Hierdurch wird zuerst das Fangnetz 9 entrollt und erst wenn das Fangnetz 9 im Wesentlichen den Behälter 11 verlassen hat, wird es durch die Gewichte 15 aufgespannt. Die Zeitdifferenz zwischen diesen zwei Zeitpunkten hängt dabei insbesondere von der Eigengeschwindigkeit des Flugkörpers 1 ab.

Im Folgenden darf nun eine bevorzugte Startanordnung 29 erläutert werden, die jedoch nicht Gegenstand der vorliegenden Erfindung ist. Die Startanordnung 29 weist einen Behälter 30 auf, wobei der Flugkörper 1 zunächst in dem Behälter 30 angeordnet ist. Der Behälter 30 weist eine Öffnung 31 auf, die zunächst durch einen Deckel 32 verschlossen ist. Der Deckel 32 ist über ein Gelenk 33 schwenkbar an dem Behälter 30 angeordnet. Innerhalb des Behälters 30 sind mehrere Führungselemente 34 angeordnet, wobei die Führungselemente 34 im Wesentlichen U-förmig ausgestaltet sind, so dass in einem Schlitz 35 die Flügel 2 des Flugkörpers 1 gehalten sind. Der Flugkörper 1 ist in dem Behälter 30 dabei derart angeordnet, dass die Spitze bzw. der Bug des Flugkörpers 1 mit dem Antrieb nahe des Deckels 32 angeordnet ist und das Heck im Wesentlichen zwischen den Führungselementen 34 in der Nähe des Bodens 30B des Behälters 30 angeordnet ist. Der Deckel 32 weist an seiner Innenseite einen Dämpfer 36 auf. Der Dämpfer 36 liegt dabei der Spitze, d.h. dem Suchkopf 7 des Flugkörpers 1 gegenüber.

An der dem Gelenk 33 gegenüberliegenden Seite des Behälters 30 ist nun ein Verschlussmechanismus 37 angeordnet. Dargestellt ist hier ein Haken 38 des Verschlussmechanismus 37. Der Verschlussmechanismus 37 ist elektrisch beispielsweise mittels eines Servos betätigbar, so dass der Verschlussmechanismus 37 in einer Grundposition den Deckel 32 sicher verschließt und nach einer entsprechenden Aktivierung den Deckel 32 freigibt. Es ist denkbar, dass der Deckel 32 im Wesentlichen durch eine Feder oder dergleichen in den geöffneten Zustand geschwenkt wird. Alternativ ist denkbar, dass allein durch das Starten des Flugkörpers 1 der Deckel aufgedrückt wird.

Das Signal zum Öffnen des Deckels 32 wird nun von der Bordelektronik des Flugkörpers 1 an den Verschlussmechanismus 37 übermittelt. Hierzu ist der Flugkörper 1 mittels einer Verbindungsleitung 39 mit dem Verschlussmechanismus 37 gekoppelt. Der Flugkörper 1 ist wiederum über eine Funkverbindung 23 mit einer Bodenstation verbunden, so dass die Bodenstation das Signal zum Starten des Flugkörpers 1 gibt, die Bordelektronik automatisch über die Verbindungsleitung 39 ein Signal an den Verschlussmechanismus 37 sendet, dass der Deckel 32 nun geöffnet wird bzw. der Haken 38 nun zurückgezogen wird, um den Deckel 32 freizugeben. Die Verbindungsleitung 39 ist dabei in eine nicht näher dargestellte Buchse am Flugkörper 1 eingesteckt, so dass eine Datenverbindung zu der Bordelektronik hergestellt ist. Die Energie zum Öffnen bzw. zum Betätigen des Verschlussmechanismus 37 wird vorzugsweise über eine Stromversorgung 40 von außen zugeführt.

Diese Startanordnung 29 hat den Vorteil, dass die Startanordnung 29 den Flugkörper 1 sicher vor den äußeren Witterungsbedingungen schützen kann und gleichzeitig keine anfällige Elektronik umfasst, da diese durch die Bordelektronik des Flugkörpers 1 bereitgestellt wird. Dies ermöglicht eine preiswerte Herstellung der Startanordnung 29. Wenn nun das Signal zum Starten von der Bodenstation gegeben wird, so wird der Antrieb 5 aktiviert, d.h. der Propeller beginnt sich zu drehen und durch den entstehenden Schub wird der Deckel 32 zur Seite geschwenkt, so dass die Öffnung 31 des Behälters 30 freigegeben wird und der Flugkörper 1 aus dieser Öffnung 31 heraus ins Freie gelangt.

### Bezugszeichenliste:

- 1: Flugkörper
- 2: Flügel
- 3: Rumpf
- 4: Ruder
- 5: Antrieb
- 6: Propellerantrieb
- 7: Suchkopf
- 8: mittleres Rumpfteil
- 9: Fangnetz
- 10: hinteres Rumpfteil
- 11: Behälter
- 12: austauschbare Einheit
- 13: Rumpfteil
- 14: Ausstoßbuchsen
- 15: Gewichte
- 16: flexibles Verbindungsmittel
- 17: Hohlraum
- 18: Fallschirm
- 19: flexibles Verbindungsmittel
- 20: flexibles Verbindungsmittel
- 21: Fremddrohne
- 22: Boden
- 23: Funkverbindung
- 24: Punkt auf Flugbahn
- 25: Flugbahn
- 26: Öffnung
- 27: Boden
- 28: Punkt auf Flugbahn
- 29: Startanordnung
- 30: Behälter
- 30B: Boden des Behälters
- 31: Öffnung
- 32: Deckel
- 33: Gelenk
- 34: Führungselement
- 35: Schlitz
- 36: Dämpfer
- 37: Verschlussmechanismus
- 38: Haken
- 39: Verbindungsleitung
- 40: Stromversorgung
- 41: Punkt auf Flugbahn

## Patentansprüche

1. Flugkörper (1) zum Abfangen von Fremddrohnen (21), mit einem Fangnetz (9) und mit einem Fallschirm (18), wobei mehrere Gewichte (15) mit dem Fangnetz (9) verbunden sind, wobei das Fangnetz (9) vom Flugkörper (1) abstoßbar ist, wobei die Gewichte (15) vom Flugkörper (1) abstoßbar sind, wobei das Fangnetz (9) mittels eines ersten Mittels und die Gewichte (15) mittels eines zweiten Mittels abstoßbar sind, wobei die Gewichte (15) und das Fangnetz zu unterschiedlichen Zeitpunkten vom Flugkörper (1) abstoßbar sind, wobei das Abstoßen der Gewichte (15) nach dem Abstoßen des Fangnetzes (9) erfolgt.

2. Flugkörper nach Anspruch 1, **dadurch gekennzeichnet, dass** die Zeitdifferenz zwischen dem Abstoß des Fangnetzes (9) und der Gewichte (15) in Abhängigkeit von der aktuellen Eigengeschwindigkeit des Flugkörpers (1) wählbar ist.

3. Flugkörper nach einem der vorstehenden Ansprüche, **dadurch gekennzeichnet, dass** das Fangnetz (9) in einem Behälter (11) angeordnet ist, wobei der Behälter (11) einen Heckbereich des Flugkörpers (1) bildet, wobei der Behälter mit dem Fangnetz (9) durch das erste Mittel abstoßbar ist.

4. Flugkörper nach dem vorstehenden Anspruch 3 , **dadurch gekennzeichnet, dass** die Gewichte (15) in Ausstoßbuchsen (14) angeordnet sind, wobei die Ausstoßbuchsen (14) in Längsrichtung des Flugkörpers (1) gesehen vor dem Behälter (11) angeordnet sind.

5. Flugkörper nach dem vorstehenden Anspruch 4, **dadurch gekennzeichnet, dass** der Flugkörper (1) eine austauschbare Einheit (12) aufweist, wobei die austauschbare Einheit (12) das Fangnetz (9), die Gewichte (15) und die Ausstoßbuchsen (14) aufweist.

6. Flugkörper nach dem vorstehenden Anspruch 5, **dadurch gekennzeichnet, dass** die austauschbare Einheit (12) ein Rumpfteil (13) aufweist, wobei das Rumpfteil (13) einen Hohlraum (17) aufweist, wobei in dem Hohlraum (17) ein Fallschirm (18) angeordnet ist, wobei der Fallschirm (18) über ein flexibles Verbindungsmittel (19, 20) mit dem Rumpfteil (13) und/oder dem Fangnetz (9) verbunden ist.

7. Flugkörper nach dem vorstehenden Anspruch 6, **dadurch gekennzeichnet, dass** der Hohlraum (17) an den Behälter (11) angrenzt, wobei der Behälter (11) eine Öffnung (26) aufweist, wobei das Fangnetz (9) über flexible Verbindungsmittel (16, 19) mit den Gewichten (15) und/oder einem Falschschirm (18) verbunden ist und diese Verbindungsmittel (16, 19) oder das Fangnetz (9) durch die Öffnung (26) geführt sind.

8. Flugkörper nach dem vorstehenden Anspruch 7, **dadurch gekennzeichnet, dass** der Innendurchmesser des Behälters (11) größer als die Öffnung (26) ist.

9. Flugkörper nach einem der vorstehenden Ansprüche 3 - 8, , **dadurch gekennzeichnet, dass** das Fangnetz (9) in Form eines aufgewickelten Strangs im Behälter (11) angeordnet ist und somit eine Wicklung bildet, wobei ein mit den Gewichten (15) verbundenes Endes des Stranges in der Wicklung innen liegt und ein freies Strangende an der Wicklung außen liegt.

10. Flugkörper nach einem der vorstehenden Ansprüche, **dadurch gekennzeichnet, dass** der Flugkörper (1) die Form einer Rakete aufweist.

11. Flugkörper nach einem der vorstehenden Ansprüche, **dadurch gekennzeichnet, dass** der Flugkörper (1) mehrere, insbesondere mehr als drei umfänglich beabstandete Flügel (2) aufweist.

12. Flugkörper nach einem der vorstehenden Ansprüche, **dadurch gekennzeichnet, dass** der Flugkörper (1) einen Antrieb (5), insbesondere einen Propellerantrieb (6), in Flugrichtung vor dem Schwerpunkt des Flugkörpers (1) aufweist.

13. Flugkörper nach einem der vorstehenden Ansprüche, **dadurch gekennzeichnet, dass** die Gewichte (15) im Bereich des Schwerpunkts des Flugkörpers (1) angeordnet sind.

14. Flugkörper nach einem der vorstehenden Ansprüche, **dadurch gekennzeichnet, dass** die maximale Endgeschwindigkeit des Flugkörpers (1) mehr als 100 km/h, insbesondere mehr als 200 km/h beträgt.

15. Flugkörper nach einem der vorstehenden Ansprüche, **dadurch gekennzeichnet, dass** das erste Mittel und/oder das zweite Mittel durch mindestens einen pyrotechnischen Treibsatz und/oder ein mit Druckluft arbeitendes Mittel gebildet sind.

16. Flugkörper nach einem der vorstehenden Ansprüche 6 - 8, , **dadurch gekennzeichnet, dass** ein Mittel zum Ausstoßen des Fallschirms (18) aus dem Hohlraum (17) vorhanden ist.

## Claims

1. Missile (1) for intercepting alien drones (21) comprising a capturing net (9) and a parachute (18), wherein a plurality of weights (15) are connected to the capturing net (9), wherein the capturing net (9) can be ejected from the missile (1), wherein the weights (15) can be ejected from the missile (1), wherein the capturing net (9) can be ejected by means of a first means and the weights (15) can be ejected by means of a second means, wherein the weights (15) and the capturing net can be ejected from the missile (1) at different points in time, wherein the ejection of the weights (15) takes place after the ejection of the capturing net (9).

2. Missile according to Claim 1, **characterized in that** the time difference between the ejection of the capturing net (9) and the weights (15) can be selected depending on the current airspeed of the missile (1).

3. Missile according to one of the preceding claims, **characterized in that** the capturing net (9) is arranged in a container (11), wherein the container (11) forms a rear area of the missile (1), wherein the container with the capturing net (9) can be ejected by the first means.

4. Missile according to the preceding Claim 3, **characterized in that** the weights (15) are arranged in ejector receptacles (14), wherein the ejector receptacles (14) are arranged in the longitudinal direction of the missile (1) seen in front of the container (11).

5. Missile according to the preceding Claim 4, **characterized in that** the missile (1) comprises a replaceable unit (12), wherein the replaceable unit (12) comprises the capturing net (9), the weights (15) and the ejector receptacles (14).

6. Missile according to the preceding Claim 5, **characterized in that** the replaceable unit (12) comprises a fuselage part (13), wherein the fuselage part (13) comprises a hollow space (17), wherein a parachute (18) is arranged in the hollow space (17), wherein the parachute (18) is connected to the fuselage part (13) and/or the capturing net (9) via a flexible connection means (19, 20).

7. Missile according to the preceding Claim 6, **characterized in that** the hollow space (17) adjoins the container (11), wherein the container (11) comprises an opening (26), wherein the capturing net (9) is connected to the weights (15) and/or to a parachute (18) via flexible connection means (16, 19) and these connection means (16, 19) or the capturing net (9) are guided through the opening (26).

8. Missile according to the preceding Claim 7, **characterized in that** the internal diameter of the container (11) is larger than the opening (26).

9. Missile according to one of the preceding Claims 3―8, **characterized in that** the capturing net (9) in the form of a coiled rope is arranged in the container (11) and thereby forms a winding, wherein an end of the rope connected to the weights (15) is found inside the winding and a free rope end is found on the outside of the winding.

10. Missile according to one of the preceding claims, **characterized in that** the missile (1) is in the form of a rocket.

11. Missile according to one of the preceding claims, **characterized in that** the missile (1) comprises a plurality of, in particular more than three, circumferentially spaced wings (2).

12. Missile according to one of the preceding claims, **characterized in that** the missile (1) has a drive (5), in particular a propeller drive (6), in front of the centre of gravity of the missile (1) in the direction of flight.

13. Missile according to one of the preceding claims, **characterized in that** the weights (15) are arranged in the region of the centre of gravity of the missile (1).

14. Missile according to one of the preceding claims, **characterized in that** the maximum airspeed of the missile (1) is over 100 km/hr, in particular over 200 km/hr.

15. Missile according to one of the preceding claims, **characterized in that** the first means and/or the second means are formed by at least one pyrotechnic propellant and/or a means operating with compressed air.

16. Missile according to one of the preceding claims 6―8, **characterized in that** a means for ejecting the parachute (18) from the hollow space (17) is provided.

## Revendications

1. Missile (1) destiné à intercepter des drones étrangers (21), comprenant un filet de capture (9) et comprenant un parachute (18), plusieurs poids (15) étant reliés au filet de capture (9), le filet de capture (9) pouvant être largué par le missile (1), les poids (15) pouvant être largués par le missile (1), le filet de capture (9) pouvant être largué par un premier moyen et les poids (15) pouvant être largués par un deuxième moyen, les poids (15) et le filet de capture pouvant être largués par le missile (1) à des instants différents, le largage des poids (15) ayant lieu après le largage du filet de capture (9).

2. Missile selon la revendication 1, **caractérisé en ce que** la différence de temps entre le largage du filet de capture (9) et des poids (15) peut être sélectionnée en fonction de la vitesse propre actuelle du missile (1).

3. Missile selon l'une des revendications précédentes, **caractérisé en ce que** le filet de capture (9) est disposé dans un contenant (11), le contenant (11) formant une zone de queue du missile (1), le contenant pouvant être largué avec le filet de capture (9) par le premier moyen.

4. Missile selon la revendication précédente 3, **caractérisé en ce que** les poids (15) sont disposés dans des douilles de largage (14), les douilles de largage (14), vues dans le sens longitudinal du missile (1), étant disposées devant le contenant (11).

5. Missile selon la revendication précédente 4, **caractérisé en ce que** le missile (1) possède une unité remplaçable (12), l'unité remplaçable (12) possédant le filet de capture (9), les poids (15) et les douilles de largage (14).

6. Missile selon la revendication précédente 5, **caractérisé en ce que** l'unité remplaçable (12) possède une partie de fuselage (13), la partie de fuselage (13) possédant un espace creux (17), un parachute (18) étant disposé dans l'espace creux (17), le parachute (18) étant relié à la partie de fuselage (13) et/ou au filet de capture (9) par le biais d'un moyen de liaison (19, 20) flexible.

7. Missile selon la revendication précédente 6, **caractérisé en ce que** l'espace creux (17) est adjacent au contenant (11), le contenant (11) possédant une ouverture (26), le filet de capture (9) étant relié aux poids (15) et/ou à un parachute (18) par le biais de moyens de liaison (16, 19) flexibles et ces moyens de liaison (16, 19) ou le filet de capture (9) étant guidés par l'ouverture (26).

8. Missile selon la revendication précédente 7, **caractérisé en ce que** le diamètre intérieur du contenant (11) est plus grand que l'ouverture (26).

9. Missile selon l'une des revendications précédentes 3 à 8, **caractérisé en ce que** le filet de capture (9) est disposé dans le contenant (11) sous la forme d'une corde enroulée et forme ainsi un enroulement, une extrémité de la corde reliée aux poids (15) se trouvant à l'intérieur dans l'enroulement et une extrémité de corde libre se trouvant à l'extérieur contre l'enroulement.

10. Missile selon l'une des revendications précédentes, **caractérisé en ce que** le missile (1) présente la forme d'une fusée.

11. Missile selon l'une des revendications précédentes, **caractérisé en ce que** le missile (1) possède plusieurs ailes (2), notamment plus de trois espacées sur la périphérie.

12. Missile selon l'une des revendications précédentes, **caractérisé en ce que** le missile (1) possède un mécanisme d'entraînement (5), notamment un mécanisme d'entraînement à hélice (6) devant le centre de gravité du missile (1) dans la direction du vol.

13. Missile selon l'une des revendications précédentes, **caractérisé en ce que** les poids (15) sont disposés dans la zone du centre de gravité du missile (1).

14. Missile selon l'une des revendications précédentes, **caractérisé en ce que** la vitesse finale maximale du missile (1) est supérieure à 100 km/h, notamment supérieure à 200 km/h.

15. Missile selon l'une des revendications précédentes, **caractérisé en ce que** le premier moyen et/ou le deuxième moyen sont formés par au moins un bloc de propergol pyrotechnique et/ou un moyen fonctionnant à l'air comprimé.

16. Missile selon l'une des revendications précédentes 6 à 8, **caractérisé en ce qu'**un moyen destiné à larguer le parachute (18) hors de l'espace creux (17) est présent.
